(19) **Europäisches Patentamt**
**European Patent Office**
**Office européen des brevets**

(11) **EP 3 186 928 B1**

(12) **EUROPEAN PATENT SPECIFICATION**

(45) Date of publication and mention
of the grant of the patent:
**19.02.2020 Bulletin 2020/08**

(51) Int Cl.:
***H04L 12/707*** (2013.01)

(21) Application number: **15760053.7**

(22) Date of filing: **31.08.2015**

(86) International application number:
**PCT/US2015/047679**

(87) International publication number:
**WO 2016/033582 (03.03.2016 Gazette 2016/09)**

(54) **BANDWIDTH-WEIGHTED EQUAL COST MULTI-PATH ROUTING**

BANDBREITENGEWICHTETES EQUAL-COST-MULTIPATH-ROUTING

ROUTAGE MULTI-CHEMIN À COÛT CONSTANT PONDÉRÉ PAR LA LARGEUR DE BANDE PASSANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.08.2014 US 201414472573**

(43) Date of publication of application:
**05.07.2017 Bulletin 2017/27**

(73) Proprietor: **Cisco Technology, Inc.**
**San Jose, CA 95134-1706 (US)**

(72) Inventors:
• **PANI, Ayaskant**
**Fremont, CA 94555 (US)**

• **BANERJEE, Ayan**
**Fremont, CA 94536 (US)**

(74) Representative: **Kazi, Ilya et al**
**Mathys & Squire LLP**
**The Shard**
**32 London Bridge Street**
**London SE1 9SG (GB)**

(56) References cited:
**EP-A1- 2 658 192     US-A1- 2003 099 194**
**US-B2- 7 317 684**

**Description**

TECHNICAL FIELD

The present disclosure relates to routing traffic through a network, and in particular, routing traffic over equal cost paths through a network.

BACKGROUND

In highly redundant networks there often exist multiple paths between a pair of network elements or nodes. Routing protocols, including link state protocols, can identify these multiple paths and are capable of using equal cost multi-paths for routing packets between these pair of nodes.

In order to accommodate bandwidth disparity between equal cost paths, the equal cost paths may be supplemented through the use of unequal cost multi-path routing. Other systems are simply ignorant of the bandwidth disparity between the equal cost paths, and therefore, traffic is distributed equally over the equal cost paths. In such cases traffic forwarding is agnostic to a path's bandwidth capacity.

EP 2 658 192 A1 describes a path weighted equal-cost multipath.

US, 7317,684 describes a method and apparatus for optimizing elastic flows in a multi-path network for a traffic demand.

US 2003/0099194 A1 describes a constrained multipath routing method.

Aspects of the invention are recited in the independent claims and preferred features are recited in the dependent claims.

BRIEF DESCRIPTION OF THE DRAWINGS

FIG. 1 illustrates a network and network devices configured to perform bandwidth-weighted equal cost multi-path routing, according to an example embodiment.

FIG. 2 is flowchart illustrating a method of performing bandwidth-weighted equal cost multi-path routing, according to an example embodiment.

FIGs. 3A-3C illustrate a plurality of equal cost paths through a network, and the population of a flow matrix through the use of a back propagation process which allows for bandwidth weighted traffic routing through the equal cost paths, according to an example embodiment.

FIGs. 4A-4C illustrate a converging plurality of equal cost paths through a network, and the population of a flow matrix which allows for bandwidth weighted traffic routing through the converging equal cost paths, according to an example embodiment.

FIGs. 5A-5C illustrate a plurality of equal cost paths through a network which is slightly modified compared to the path illustrated in FIGs. 4A-4C to illustrated the effect that changes in network structure have on the population of a flow matrix.

FIGs. 6A-6C illustrate a plurality of equal cost paths through a network, and the population of a flow matrix through the use of an optimization process which allows for bandwidth weighted traffic routing through the equal cost paths, according to an example embodiment not forming part of the claimed invention.

FIG. 7 is a block diagram illustrating a device configured to perform bandwidth-weighted equal cost multi-path routing, according to an example embodiment.

DESCRIPTION OF EXAMPLE EMBODIMENTS

Overview

Aspects of the invention are recited in the independent claims and preferred features recited in the dependent claims.

Example Embodiments

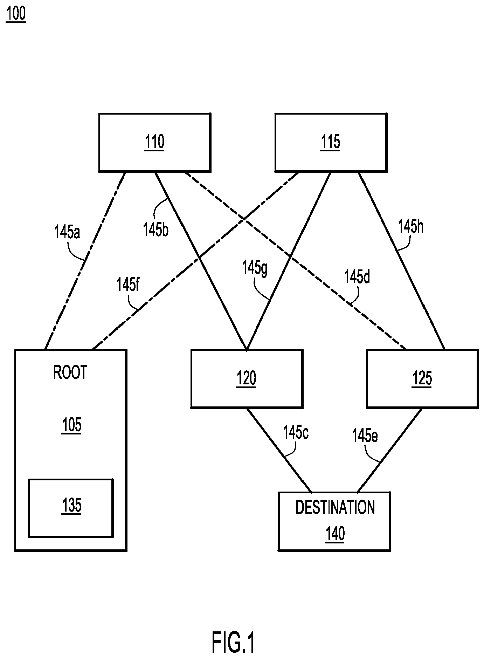

Depicted in FIG. 1 is network 100 comprising a root node 105, and additional network nodes 110, 115, 120 and 125. Root node 105 is configured, through bandwidth-weighted path computation unit 135 to provide bandwidth-weighted equal cost multi-path routing. For example, bandwidth-weighted path computation unit 135 may distribute traffic over the nodes of network 100 according to the ratio of the minimum bandwidth links for each path from root node 105 to destination 140.

According to the example of FIG. 1, root 105 receives link state protocol (LSP) messages from nodes 110-125 which provide root 105 with the metric costs associated with transmitting messages to destination 140 through nodes 110-125. By using these metric costs, root 105 can calculate a plurality of equal-cost multi-paths (ECMP) through network 100. According to the example of FIG. 1, these paths would be:

   A. the path defined by link 145a, link 145b and link 145c;

   B. the path defined by link 145a, link 145d and link 145e;

   C. the path defined by link 145f, link 145g and link 145c; and

   D. the path defined by link 145f, link 145h and link 145e.

Yet, as illustrated by dashed links 145a, 145d and 145f, each of the above described paths may not be able to handle the same amount of traffic. For example, links 145a and 145f may support a bandwidth of 40 GB each, links 145b, 145c, 145h and 145e may support a bandwidth of 20 GB each, and link 145d is only able to support a bandwidth of 10 GB. Bandwidth-weighted computation unit 135 can use this information to determine an aggregated or unconstrained bandwidth from root 105 to destination 140. This aggregated or unconstrained bandwidth is the maximum amount of traffic that can be sent from root 105 to destination 145 over the above-described equal cost paths. In this case, the aggregated or unconstrained bandwidth will be the aggregation of the smallest bandwidth link for each of the equal cost paths. Accordingly, the aggregated or unconstrained bandwidth for traffic between root 105 and destination 140 will be 70 GB (20 GB + 10 GB +20 GB +20 GB).

Bandwidth-weighted path computation unit 135 also sends traffic according to the ratio of the lowest bandwidth link in each path, traffic will be sent over paths A, B, C, and D in the ratio of 2:1:2:2. In other words, traffic is sent according to the smallest capacity link of each of the equal cost paths. If root 105 has 70 GB of traffic to send, 20 GB will be sent over path A, 10 GB will be sent over path B, 20 GB will be sent over path C, and 20 GB will be sent over path D.. If root 105 has 35 GB of traffic to send, 10 GB will be sent over path A, 5 GB will be sent over path B, 10 GB will be sent over path C, and 10 GB will be sent over path D. By splitting the traffic according to this ratio, root 105 is capable of fully utilizing the resources of network 100 without accumulating dropped packets at an over-taxed network link.

Absent bandwidth-weighted path computation unit 135, root 105 may send traffic over network 100 in a manner which results in dropped packets, or which inefficiently utilizes network resources. For example, if root 105 splits 60 GB of traffic equally between each of the paths, packets will likely be dropped by link 145d. Specifically, equally splitting the traffic between the four paths will result in 15 GB being sent over each path. Accordingly, link 145d will be tasked with accommodating 15 GB of data when it only has the bandwidth to accommodate 10 GB. This shortfall in available bandwidth may result in packets being dropped at node 110. Alternatively, if root 105 limits its transmission rate to that of the lowest bandwidth link, mainly link 145d, it will underutilize all of the other links in network 100. Specifically, network 100 will be limited to a maximum transmission bandwidth of 40 GB between root node 105 and destination node 140, when it is actually capable of transmitting 70 GB.

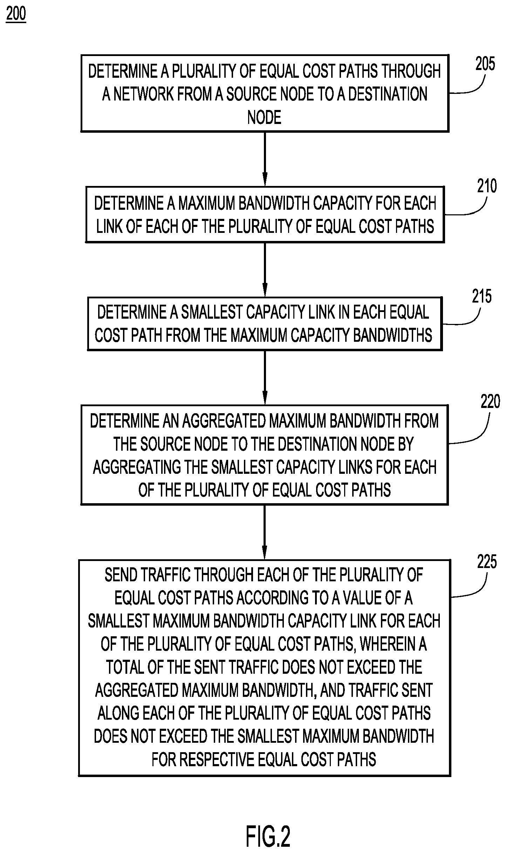

With reference now made to FIG. 2, depicted therein is flowchart 200 illustrating a process for providing bandwidth-weighted equal cost multi-path routing. In 205, a plurality of equal cost paths through a network from a source node to a destination node are determined. For example, a Dijkstra process may be used to determine the equal cost paths. According to one example embodiment, a priority queue such as a "min-heap" is utilized to determine the equal cost paths. The nodes from a source node to a destination node are tracked by keeping them in a min-heap, in which the value of the min-heap is the cost of reaching a node from the root node (or the source node which is running the process). In each successive step of the Dijkstra process, the minimal node is "popped" from the min-heap and its neighbors' costs are adjusted, or if new neighbors are discovered, the new neighbors are added to the min-heap. The Dijkstra process stops when the heap is empty. At this point all nodes reachable from the root or source node are discovered and have an associated cost which is the cost of the least expensive path from root to this node.

In 210, a maximum bandwidth capacity for each link of each of the plurality of equal cost paths is determined. This determination may be made in response to receiving an LSP message from the nodes in the network which comprise the equal cost paths determined in 205. In step 215, a smallest capacity link in each equal cost path is determined from the maximum capacity bandwidths determined in step 210. In 220, an aggregated maximum bandwidth from the source node to the destination node is determined by aggregating the smallest capacity links for each of the plurality of equal cost paths.

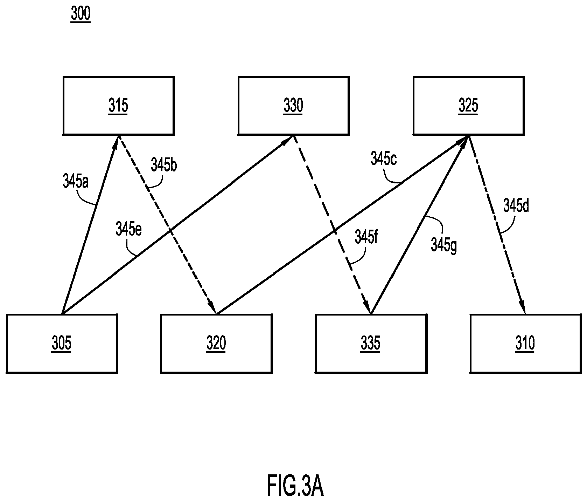

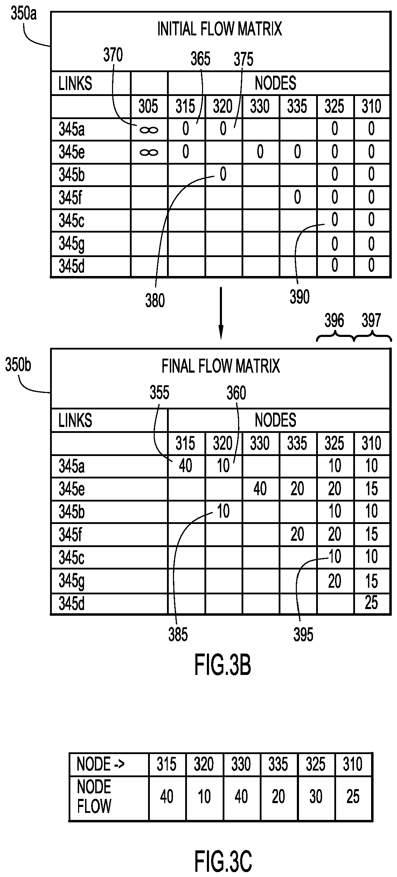

In 225, traffic is sent from the source node along each of the plurality of equal cost paths according to a value of a capacity for the smallest capacity link for each of the plurality of equal cost paths, wherein a total of the sent traffic does not exceed the aggregated maximum bandwidth, and traffic sent along each of the plurality of equal cost paths does not exceed the smallest maximum bandwidth for respective equal cost paths. Specific examples of the determination of the smallest maximum bandwidth link and the sending of the traffic according to the value of the smallest maximum bandwidth link will be described in greater detail with reference to FIGs. 3-6, below.

With reference now made to FIGs. 3A-3C, depicted in FIG. 3A is a network 300 which includes source node 305 and destination node 310. Between source node 305 and destination node 310 are two equal cost paths. The first equal cost path initiates at source node 305, traverses node 315, node 320 and node 325, and ends at destination node 310. The second equal cost path also begins at source node 305, traverses node 330, node 335 and node 325, and ends at destination node 310. These two paths are determined through, for example, a Dijkstra process as described above with reference to FIG. 2. Additionally, through the use of, for example, LSP messages, the maximum bandwidth available for each of links 345a-345g is known to root node 305, or another device, such as a path computation element. According to the present example, links 345a, 345c, 345e and 345g have a maximum bandwidth capacity of 40 GB; link 345b has a maximum bandwidth capacity of 10 GB, as illustrated by the short dashed line, link 345f has a maximum bandwidth capacity of 20 GB, as illustrated by the long dashed line, and link 345d has a maximum bandwidth capacity of 25 GB, as illustrated by the combination long and short dashed line.

Upon receiving the bandwidth information, the source node 305, or another device such as a path computation element, will determine the lowest bandwidth capacity link in each path. For example, when the path from node 305 to node 310 through nodes 315, 320 and 325 is evaluated, it will be determined that the lowest bandwidth capacity link in the path is link 345b, which has a bandwidth value of 10 GB. Accordingly, the maximum bandwidth that can be sent over this path is 10 GB. In other words, link 345b is the minimum link, and therefore, limits the traffic through the path

In order to determine which link has the lowest bandwidth capacity, a flow matrix is employed. The flow matrix stores values for total bandwidth that can be sent over a link for a particular destination node, in order to determine the minimum bandwidth path. Through the process that will now be described with reference to FIG. 3B, an initial flow matrix, such as flow matrix 350a is converted to final flow matrix 350b through a back propagation process. Accordingly, looking at flow matrix 350b, the value 40 at 355 illustrates that when sending data from node 305 over the link 345a to node 315, when node 315 is the final destination, 40 GB of data can be sent. On the other hand, value 360 illustrates that when data is sent from node 305 over the link 345a, when node 320 is the final destination, only 10 GB of data can be sent of over the link due to link 315 to node 320 having a minimum bandwidth of 10 GB. The population of final flow matrix 350b from initial flow matrix 350a will now be described.

Initial flow matrix 350a is originally populated by creating a matrix that only contains vertices and edges which are used in the previously determined equal cost paths. The vertices are sorted by hop count, i.e. how far they are from the root or source node. The value for the root vertex or source vertex is given an infinite capacity, while all other vertices or nodes are marked with a capacity of 0. This results in the initial flow matrix 350a. It is noted that the empty spaces in the flow matrix represent links which are not used to reach a particular node. For example, the link 345f is left blank for nodes 315, 320 and 330 because it is not used to send data to these nodes.

With the initial flow matrix 350a populated, a link with the lowest hop count to the destination is selected. In the simplest case, the link 345a when node 315 is the ultimate destination will be considered. Here, the value in the flow matrix, in this case, shown at entry 365, will be populated according to the following expression:

$$\text{minimum of (capacity of parent vertex, capacity of link);} \qquad \text{exp. 1.}$$

In other words, the value will be populated with the lesser of the value at 370 or the bandwidth capacity of the link 345a. In this case, expression 1 would read:

$$\text{minimum of } (\infty, 40);$$

The 40 GB capacity of link 345a is less than the infinite capacity of root or source node 305, and therefore, in the final flow matrix 350b, value 355 has a value of 40. Normally, this value would then be back propagated to previous links in the path, but in the present case, only a single link is used to reach node 315.

Taking the slightly more complicated case of using node 320 as the ultimate destination, the process would begin in the same way. First, the process would begin by determining a value for entry 375. Since this presents the same scenario as populating entry 365, entry 375 would initially be populated with a value of 40. Once the value of 375 is determined, a value for entry 380 will be determined. In this instance, expression 1 for entry 380 would read:

$$minimum\ of\ (40,\ 10);$$

This is because the capacity for the parent vertex is 40 GB, and the capacity for the present link is 10. Accordingly, in final flow matrix 350b, entry 385 has a value of 10. In this case, there is a subsequent link to propagate back through; therefore, in final flow matrix 350b, entry 360 also has a value of 10 as the value of 385 is propagated back to entry 360. This process will work in an analogous manner for path from node 305 with node 330 as an ultimate destination, and for the path from node 305 with node 335 as an ultimate destination.

The process described above becomes more complicated when node 325 is used as the ultimate destination. Initially, the process would begin in the same way. But, when the value for entry 390 is calculated, expression 1 would read:

$$minimum\ of\ (10,\ 40);$$

Here, the link 345c can handle 40 GB, but it will be limited to the value of 10 GB for link 345b. The capacity for the parent vertex will be 10 GB due to the process described above for populating entry 385. Accordingly, the entry for 390 is repopulated with 10, as illustrated by entry 395 in final flow matrix 350b. Yet, this fails to account for the full capacity that may be sent from node 305 to node 325. Specifically, traffic can also be sent from node 305 to node 325 over the path comprising links 345e, 345f and 345g, as illustrated by values for all of these links in column 396 of final flow matrix 350b. Therefore, node 325 can receive 30 GB of traffic from node 305, 10 GB from the path including link 345c and 20 GB from the path including link 345g.

In other words, when back propagating from node 325, the path splits, with some of the traffic having come from node 335 and some of the traffic having come from node 320. Specifically, the capacity of the parent nodes 320 and 335 are taken into consideration when back propagating. Accordingly, the capacity of node 320 is back propagated along its path, and the capacity of node 335 is propagated along its path. This ensures that neither link becomes overloaded, but traffic sent to node 325 is still optimized for the total amount of traffic that can be sent over the two paths. The process used to make these determinations can utilize a temp variable for each parent node in order to remain aware of the parent capacity.

The process described above also becomes more complicated for a final destination of node 310. This is because link 345d only has a capacity of 25 GB, meaning it can handle less than the 30 GB capacity that can be sent to node 325. In other words, even though the path containing node 315 can send 10 GB, and the path containing node 330 could handle 20 GB, when these two paths merge at node 325, they will be limited by the capacity of the merged linked 345d. In order to determine how much traffic should sent over the path that includes link 345c versus the path that includes link 345g, a water-filling process may be used. Specifically, each of the paths will be "filled" until they reach their saturation level. By splitting the traffic in this way, 10 GB of traffic would be sent over the path that includes link 345c, and 15 GB would be sent over the path that includes path 345g. In other words, the paths will receive equal amounts of traffic until path 345c reaches its limit of 10 GB, and the path that includes 345g will receive the remainder of the traffic. According, column 397 of final flow matrix 350b illustrates this split.

Once flow matrix 350b is populated, a final determination of how much traffic can be sent to each node is determined, and illustrated in FIG. 3C. Specifically, FIG. 3C illustrates the aggregated maximum or unconstrained bandwidth for each destination from source node 305. For example, 40 GB of traffic can be sent to node 315 as link 345a has a 40 GB capacity. Ten GB of traffic can be sent to node 320 because the amount of traffic will be limited by the 10 GB capacity of link 345b. Forty GB of traffic can be sent to node 330 as link 345e has a 40 GB capacity, while 20 GB may be sent to node 335 due to the 20 GB capacity of link 345f. Node 325, on the other hand, can receive 30 GB of traffic, the combined or aggregated capacity for the two paths that can reach node 325. Finally, node 310 is limited to 25 GB by link 345d. For nodes 325 and 310, columns 396 and 397 of final flow matrix 350b show how much traffic should be sent over each path to nodes 325 and 310.

Furthermore, when less than the full capacity is to be sent to any of nodes 325 and 310, the amount of traffic sent over each path may be sent in the ratio of the capacities illustrated in final flow matrix 350b. For example, if only 3 GB are to be sent to node 325, 1 GB will be sent over the path containing link 345c, and 2 GB will be sent over the path containing link 345g. This is because the ratio over each path is 1:2 (i.e., 10GB to 20 GB as illustrated in column 396 of final flow matrix 350b). If 3 GB are to be sent to node 310, 1.2 GB will be sent over the path containing link 345c while 1.8 GB will be sent over the path containing link 345g (i.e., a ratio of 2:3, or 10 GB to 15 GB).

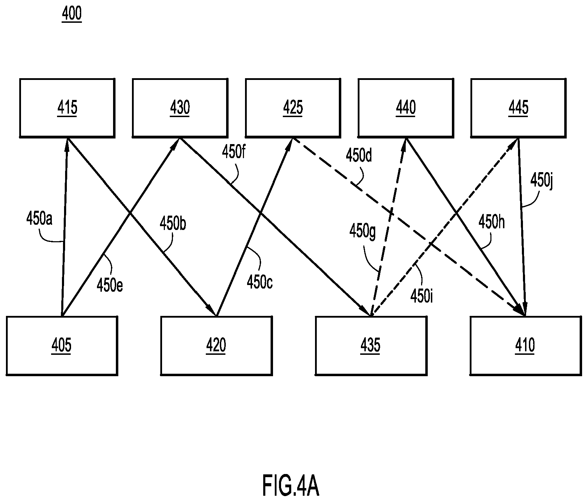

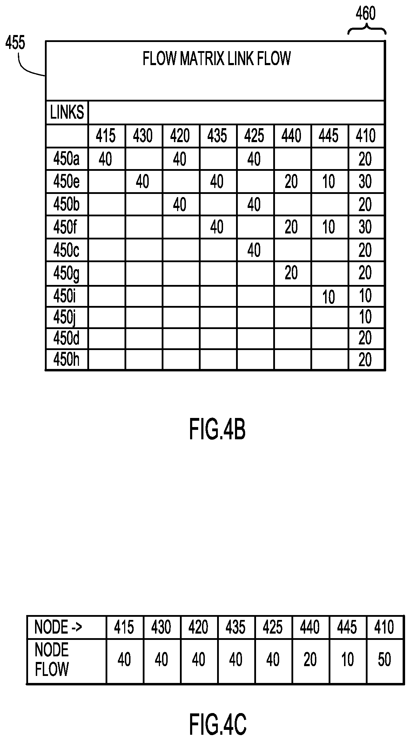

With reference now made to FIG. 4A-4C, depicted in FIG. 4A is network 400 in which the equal cost paths from node 405 to node 410 are illustrated. As with FIG. 3A, all of the solid links are 40 GB links, while long-dash links 450d

5

and 450g are 20 GB links, and short dash link 450i is a 10 GB link. With regard to the path that traverses links 450a, 450b, 450c and 450d, the population of the flow matrix for this path will utilize expression 1 above, without too many complications. The path which begins with link 450e is complicated by the split (or merger in the back propagation direction) at node 435. Specifically, when back propagating from node 410 the path along link 450j and the path along link 450h will merge at node 435.

In order to appropriately back propagate the correct value for links 450f and 450e, a temporary (temp) variable is used to store the value for intermediate nodes, in this case, 20 GB for node 440, and 10 GB for node 445. Specifically, link 450f is a merged link, from which two paths split. When node 435 is reached, the values in the temp variable are added together, and this value is back propagated along the rest of the path to root node 405. This is illustrated in column 460 of flow matrix 455. As can be seen in flow matrix 455, the links prior to node 435 (in the back propagation direction) have values of 10 and 20 GB, respectively. The links after node 435 (in the back propagation direction) have the 30 GB of capacity, the sum of 10 and 20 GB. In other words, even though the capacity of the merged link 450f is greater than or equal to a sum of the capacities of the smallest capacity link for each of the split paths, the traffic sent over link 450f is limited to the sum of the capacities of link 450g and 450i. Accordingly, even though 450f is a 40 GB link, when traffic is sent to node 410, the traffic sent over link 450f is limited to 30 GB, as indicated in the valued for link 450f in column 460 of flow matrix 455.

Once flow matrix 455 is populated, a final determination is made for how much traffic can be sent to each node, as illustrated in FIG. 4C. Specifically, FIG. 4C illustrates the aggregated maximum or unconstrained bandwidth for each destination from source node 405. For example, 40 GB of traffic can be sent to nodes 415, 420, 425, 430 and 435 as all of the links leading up to these nodes have a 40 GB capacity. Ten GB of traffic can be sent to node 445 because the amount of traffic will be limited by the 10 GB capacity of link 450i. Twenty GB of traffic can be sent to node 440 because the amount of traffic will be limited by the 20 GB capacity of link 450g. Finally, 50 GB, the sum or aggregate of the traffic that can be accommodated by the paths leading from links 450d, 450h and 450j, can be sent to node 410. Accordingly, when traffic is sent to node 410, it will be sent in the ratio of 2:2:1 over links 450d, 450h and 450j, respectively. Similarly, when the traffic is initially sent towards node 410 from node 405, it will be sent in the ratio of 2:3 over links 450a and 450e, respectively. Subsequently, the traffic sent over link 450e will be split in the ratio of 2:1 at node 435 for transmission over links 450g and 450i, respectively.

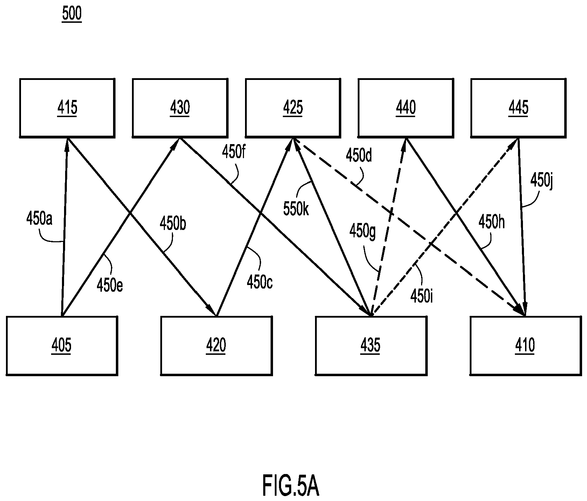

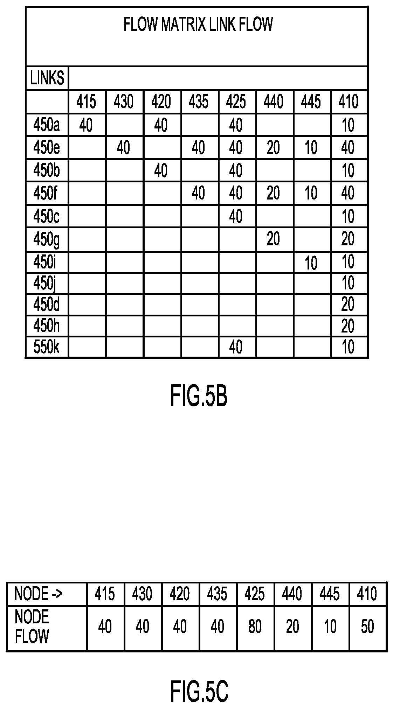

With reference now made to FIGs. 5A - 5C, depicted in FIG. 5A is network 500 which further serves to illustrate the techniques taught herein. Specifically, network 500 is structurally identical to network 400 of FIG. 4A, except for the inclusion of an additional link 550k between node 435 and node 425. The inclusion of this additional link changes the values illustrated in FIGs. 5B and 5C. Specifically, the inclusion of link 550k allows for additional traffic to be sent to node 425 when node 425 is the final destination of the traffic, and changes the ratio of traffic sent over the other links of network 500 when node 410 is the ultimate destination of the traffic.

With regard to the traffic that can be sent to node 425, when node 425 is now the ultimate destination of the traffic, 80 GB of traffic can be sent. Forty GB of the traffic can be sent over links 450a and 450b and 450c, and an additional 40 GB of traffic can be sent over links 450e, 450f and 550k

With regard to the traffic sent to node 410, node 410 will still be limited to receiving 50 GB of traffic given that link 450d is a 20 GB link, link 450g is a 20 GB link, and link 450i is a 10 GB link. Yet, because traffic can reach node 425 from two paths, and node 435 is along the path for the traffic traversing node 425, node 440 and node 445, the amount of traffic sent through these nodes will be altered. Specifically, because node 435 provides traffic to nodes 425, 440 and 445, the amount of traffic initially sent to node 435 over link 450e is now increased from 30 GB to 40 GB. Similarly, the traffic sent over link 450f is also increased from 30 GB to 40 GB. On the other hand, because the traffic to link 410 is still limited to 50 GB, the traffic sent over links 450a, 450b and 450c is now limited to 10 GB.

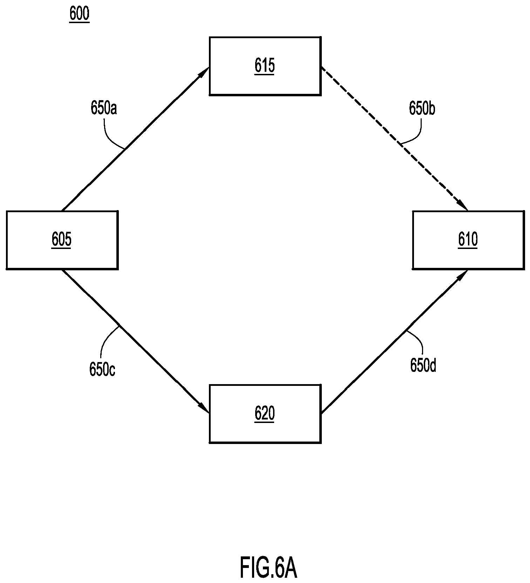

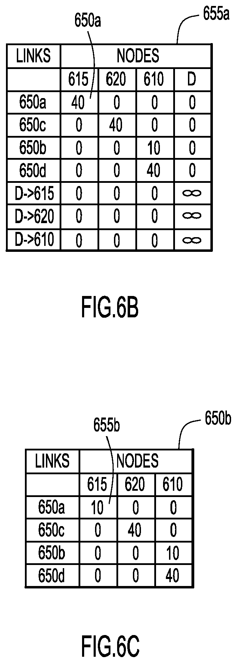

With reference now made to FIGs. 6A-6C, an additional method for populating a flow matrix, such as flow matrix 650 of FIG. 6B, which is not part of the claimed invention, will be described. As with the back propagation methods described above, the process of populating flow matrix 650 begins by performing Dijkstra process to determine equal cost paths through network 600. These paths are illustrated in FIG. 6A.

Next, a flow capacity matrix 650 is formed, according to the following rules:

C[u,v,w] = {Bandwidth of link between u and v if link <u,v> appears in any ECMP path between root node and w, Else it is set as 0};

where u and v are two nodes connected by an edge or link in network 600, and w is the destination node.

A dummy node call "D" is also added to the matrix where all nodes except for the root are connected to this dummy node D. The capacity of each of these new links is infinite. A flow matrix populated according to these rules appears in FIG. 6B.

Next, a function F(u,v,w) is defined to be the amount of traffic sourced from the root node to destination node w flowing between link <u,v> in the u to v direction. The following constraints are applied to this function:

- **Capacity Constraints:** For all nodes u,v in the graph:

$$SUM(F(u,v,w)) <= C[u,v,w];$$

i.e. total flow for any destination cannot exceed the link capacity for that destination.

• **Flow Conservation:** For any node except for root and dummy-sink-node:

$$SUM(F(u,v,w)) = 0;$$

i.e. sum total of traffic coming and leaving an intermediate node is 0.

• **Skew Symmetry:** For all nodes u,v, for all destinations w,

$$F(u,v,w) = F(v,u,w)$$

With these constraints in place, the function F is optimized so that F(root_node, v ,w) is maximized for all destinations w and for each neighbor v of root-node.

Specifically, with the matrix determined, it can be run through a linear programming process, such as Simplex, to solve for the flow on each link per destination. This will simultaneously solve for all destinations. Alternately, the matrix can be run through a standard max-flow network process on a pre-destination basis, such as the Ford & Fulkerson method.

Upon solving for the above model, the flow matrix 650a FIG. 6B will be determined to be 650b of FIG. 6C. For example, as a result of the Flow Conservation rule and the Skew Symmetry rule, value 655a in initial flow matrix 650a is changed to value 655b in final flow matrix 650b. Specifically, if value 655a remained "40," the 40 GB flow into node 615 would exceed the 10 GB flow out of node 615 to node 610.

Solving the flow matrix to conform with the above-defined rules gives an optimal per link per destination flow value. From the root node perspective, flow matrix 650b gives a weighted ratio for traffic sent from a node to its neighbor based on the destination node. This can then be used for bandwidth weighted ECMP routing.

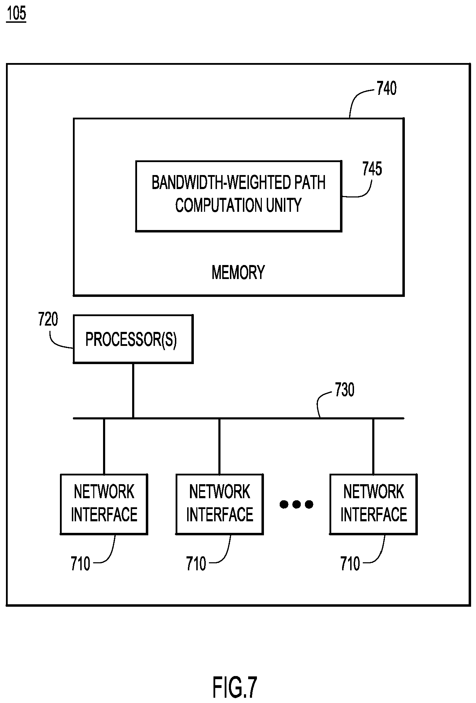

Referring now to FIG. 7, an example block diagram is shown of a device, such as a root node 105 of FIG. 1 or a path computation element, configured to perform the techniques described herein. Root node 105 comprises network interfaces (ports) 710 which may be used to connect root node 105 to a network, such as network 100 of FIG. 1. A processor 720 is provided to coordinate and control root node 105. The processor 720 is, for example, one or more microprocessors or microcontrollers, and it communicates with the network interface 710 via bus 730. Memory 740 comprises software instructions which may be executed by the processor 720. For example, software instructions for root node 105 include instructions for bandwidth-weighted path computation unit 135. In other words, memory 740 includes instructions for root node 105 to carry out the operations described above in connection with FIGs. 1-6.

Memory 740 may comprise read only memory (ROM), random access memory (RAM), magnetic disk storage media devices, optical storage media devices, flash memory devices, electrical, optical or other physical/tangible (e.g. non-transitory) memory storage devices. Thus, in general, the memory 740 may comprise one or more tangible (non-transitory) computer readable storage media (e.g., a memory device) encoded with software comprising computer executable instructions. When the software, e.g., bandwidth-weighted path computation software 745 is executed (by the processor 720), the processor is operable to perform the operations described herein in connection with FIGs. 1-6. While the above description refers to root node 105, processor 720, memory 740 with software 745, bus 730, and network interfaces 710 may also be embodied in other devices, such as a path computation element that is separate from the root node of a network traffic path.

In summary, a method is described comprising: determining a plurality of equal cost paths through a network from a source node to a destination node; determining a maximum bandwidth capacity for each link of each of the plurality of equal cost paths; determining a smallest capacity link for each of the plurality of equal cost paths from the maximum capacity bandwidths for each link; determining an aggregated maximum bandwidth from the source node to the destination node by aggregating the smallest capacity links for each of the plurality of equal cost paths; and sending traffic from the source node along each of the plurality of equal cost paths according to a value of a capacity for the smallest capacity link for each of the plurality of equal cost paths, wherein a total of the sent traffic does not exceed the aggregated maximum bandwidth, and traffic sent along each of the plurality of equal cost paths does not exceed the smallest maximum bandwidth for respective equal cost paths.

Similarly, an apparatus is described comprising: a network interface unit to enable communication over a network; and a processor coupled to the network interface unit to: determine a plurality of equal cost paths through the network from a source node to a destination node; determine a maximum bandwidth capacity for each link of each of the plurality of equal cost paths; determine a smallest capacity link for each of the plurality of equal cost paths from the maximum capacity bandwidths for each link; determine an aggregated maximum bandwidth from the source node to the destination node by aggregating the smallest capacity links for each of the plurality of equal cost paths; cause traffic to be sent from the source node along each of the plurality of equal cost paths according to a value of a capacity for the smallest capacity link for each of the plurality of equal cost paths, wherein a total of the sent traffic does not exceed the aggregated maximum bandwidth, and traffic sent along each of the plurality of equal cost paths does not exceed the smallest maximum bandwidth for respective equal cost paths.

Further still, it is described one or more computer readable storage media encoded with software comprising computer executable instructions and when the software is executed operable to: determine a plurality of equal cost paths through a network from a source node to a destination node; determine a maximum bandwidth capacity for each link of each of the plurality of equal cost paths; determine a smallest capacity link for each of the plurality of equal cost paths from the maximum capacity bandwidths for each link; determine an aggregated maximum bandwidth from the source node to the destination node by aggregating the smallest capacity links for each of the plurality of equal cost paths; and cause traffic to be sent from the source node along each of the plurality of equal cost paths according to a value of a capacity for the smallest capacity link for each of the plurality of equal cost paths, wherein a total of the sent traffic does not exceed the aggregated maximum bandwidth, and traffic sent along each of the plurality of equal cost paths does not exceed the smallest maximum bandwidth for respective equal cost paths

The above description is intended by way of example only. Various modifications and structural changes may be made therein without departing from the scope of the claims.

**Claims**

1. A method (200) comprising:

    determining (205) a plurality of equal cost paths through a network from a source node to a destination node;
    determining (210) a maximum bandwidth capacity for each link of each of the plurality of equal cost paths;
    determining (215) a smallest capacity link in each equal cost path from the determined maximum bandwidth capacities, comprising populating (215) a flow matrix storing a bandwidth capacity for each link along each of the plurality of equal cost paths for traffic terminating at the destination node,

        wherein populating the flow matrix comprises performing a back propagation process comprising converting an initial flow matrix (350a) into a final flow matrix (350b) through the back propagation process,
        wherein the initial flow matrix (350a) comprises vertices and links which are used in the determined plurality of equal cost paths, a capacity value for the source node being given an infinite capacity, while all other vertices are marked with a capacity of 0; and
        wherein the converting comprises:

            for each link between a parent vertex and a destination vertex, along each of the plurality of equal cost paths for traffic terminating at the destination node, determining a value of the capacity of the link, such that the value is a minimum of a capacity of a parent vertex and of a capacity of the link, and
            for each link along each of the plurality of equal cost paths for traffic terminating at the destination node, from the destination node to the source node:

                at vertices where traffic comes from or goes to a single vertex, back propagating the determined value to a previous link in the path,
                at vertices where traffic comes from a plurality of parent vertices, back propagating each capacity of the parent vertices along its path, and
                at vertices where traffic splits to intermediate vertices, using a temporary variable to store the determined value for each intermediate vertex, adding together the values stored in the temporary variables, and back propagating the added value along the rest of the path;

    determining (220), from the flow matrix, an aggregated bandwidth capacity for traffic sent from the source node to terminate at the destination node by aggregating capacities of the smallest bandwidth capacity links for each of the plurality of equal cost paths between the source node and the destination node; and
    sending (225) traffic from the source node to the destination node such that
    the sent traffic does not exceed the aggregated bandwidth capacity for the destination node, and
    traffic sent along each of the plurality of equal cost paths does not exceed bandwidth capacities of the smallest bandwidth capacity links for respective equal cost paths for traffic sent to the destination node.

2. The method of claim 1, wherein sending (225) traffic through each of the plurality of equal cost paths comprises splitting traffic between a first of the plurality of equal cost paths and a second of the plurality of equal cost paths according to a ratio of a bandwidth capacity for a smallest bandwidth capacity link of the first of the plurality of equal cost paths to a bandwidth capacity for a smallest bandwidth capacity link of the second of the plurality of equal cost paths.

3. The method of claim 1, wherein determining (205) the plurality of equal cost path comprises determining at least two equal cost paths which share a merged link.

4. The method (200) of claim 3, wherein:
the at least two equal cost paths share the merged link such that the at least two equal cost paths are separate paths prior to the merged link.

5. The method of claim 4, wherein:
sending (225) traffic comprises sending traffic through the at least two equal cost paths and limiting a sum of traffic sent over the at least two equal cost paths to a bandwidth capacity value of the merged link.

6. The method of claim 3, further comprising:

   determining that the at least two equal cost paths share a merged link such that the at least two equal cost path are separate paths subsequent to the merged link;
   determining (215) that a smallest bandwidth capacity link for each of the plurality of equal cost paths is subsequent to the merged link;
   determining (220) that a bandwidth capacity of the merged link is greater than or equal to a sum of the capacities of the smallest bandwidth capacity link for each of the at least two equal cost paths via the back propagation; and
   sending (225) traffic through the merged link up to a value of the sum of the capacities of the smallest bandwidth capacity link for each of the at least two equal cost paths.

7. The method of claim 1, wherein determining (205) the plurality of equal cost paths comprises performing a Dijkstra process utilizing a priority queue.

8. The method of claim 7, wherein determining (215) the bandwidth capacity for each link of each of the plurality of equal cost paths comprises receiving link state protocol messages identifying a capacity for each link in the plurality of equal cost paths.

9. An apparatus (105) comprising:

   a network interface unit (710) to enable communication over a network; and
   a processor (720) coupled to the network interface unit to perform a method according to any preceding claim.

10. One or more computer readable storage media encoded with software comprising computer executable instructions and when the software is executed operable to perform a method according to any of claims 1 to 8.

**Patentansprüche**

1. Verfahren (200), das Folgendes umfasst:

   Bestimmen (205) einer Vielzahl von Pfaden mit gleichen Kosten durch ein Netzwerk von einem Quellknoten zu einem Zielknoten;
   Bestimmen (210) einer maximalen Bandbreitenkapazität für jede Verbindung von jedem der Vielzahl von Pfaden mit gleichen Kosten;
   Bestimmen (215) einer kleinsten Kapazitätsverbindung in jedem Pfad gleicher Kosten aus den bestimmten maximalen Bandbreitenkapazitäten, umfassend das Auffüllen (215) einer Flussmatrix, die eine Bandbreitenkapazität für jede Verbindung entlang jedem der Vielzahl von Pfaden mit gleichen Kosten für den am Zielknoten endenden Datenverkehr speichert,

      wobei das Bestücken der Flussmatrix das Durchführen eines Rückausbreitungsprozesses umfasst, der das Umwandeln einer anfänglichen Flussmatrix (350a) in eine endgültige Flussmatrix (350b) durch den Rückausbreitungsprozess umfasst,

wobei die anfängliche Flussmatrix (350a) Eckpunkte und Verbindungen umfasst, die in der bestimmten Vielzahl von Pfaden mit gleichen Kosten verwendet werden, wobei einem Kapazitätswert für den Quellknoten eine unendliche Kapazität gegeben wird, während alle anderen Eckpunkte mit einer Kapazität von O markiert sind; und

wobei das Umwandeln Folgendes umfasst:

für jede Verbindung zwischen einem Hauptknoten und einem Zielknoten entlang jedem der Vielzahl von Pfaden mit gleichen Kosten für den Datenverkehr, der am Zielknoten endet, Bestimmen eines Werts der Kapazität der Verbindung, so dass der Wert ein Minimum einer Kapazität eines übergeordneten Scheitelpunkts und einer Kapazität der Verbindung ist, und

für jede Verbindung entlang jedes der Vielzahl von Pfaden mit gleichen Kosten für Datenverkehr, der am Zielknoten endet, vom Zielknoten zum Quellknoten:

an Scheitelpunkten, an denen Datenverkehr von einem einzelnen Scheitelpunkt kommt oder dorthin geht, Rückausbreiten des ermittelten Werts an einen vorherigen Link im Pfad,

an Scheitelpunkten, an denen der Datenverkehr von einer Vielzahl übergeordneter Scheitelpunkten ausgeht, Rückausbreiten jeder Kapazität der übergeordneten Scheitelpunkte entlang ihres Pfades, und

an Scheitelpunkten, an denen sich der Datenverkehr in Zwischenscheitelpunkte aufteilt, Speichern des ermittelten Werts für jeden Zwischenscheitelpunkt mithilfe einer temporären Variablen, Addieren der in den temporären Variablen gespeicherten Werte und Rückausbreiten des hinzugefügten Werts entlang des restlichen Pfads;

Bestimmen (220) einer aggregierten Bandbreitenkapazität aus der Flussmatrix für Datenverkehr, der vom Quellknoten gesendet wird, um am Zielknoten zu enden durch Zusammenfassen von Kapazitäten der Verbindungen mit der kleinsten Bandbreitenkapazität für jeden der Vielzahl von Pfaden mit gleichen Kosten zwischen dem Quellknoten und dem Zielknoten; und

Senden (225) von Datenverkehr vom Quellknoten zum Zielknoten,

so dass der gesendete Datenverkehr die aggregierte Bandbreitenkapazität für den Zielknoten nicht überschreitet, und

Datenverkehr, der über jeden der Vielzahl von Pfaden mit gleichen Kosten gesendet wird, nicht die Bandbreitenkapazitäten der Links mit der kleinsten Bandbreitenkapazität für jeweilige Pfade mit gleichen Kosten für Datenverkehr, der an den Zielknoten gesendet wird, überschreitet.

2. Verfahren nach Anspruch 1, wobei das Senden (225) von Datenverkehr über jeden der Vielzahl von Pfaden mit gleichen Kosten Folgendes umfasst: Aufteilen des Datenverkehrs zwischen einem ersten der Vielzahl von Pfaden mit gleichen Kosten und einem zweiten der Vielzahl von Pfaden mit gleichen Kosten gemäß einem Verhältnis einer Bandbreitenkapazität für eine kleinste Bandbreitenkapazitätsverbindung des ersten der Vielzahl von Pfaden mit gleichen Kosten zu einer Bandbreitenkapazität für eine kleinste Bandbreitenkapazitätsverbindung des zweiten der Vielzahl von Pfaden mit gleichen Kosten.

3. Verfahren nach Anspruch 1, wobei das Bestimmen (205) der Vielzahl von Pfaden mit gleichen Kosten das Bestimmen von mindestens zwei Pfaden mit gleichen Kosten umfasst, die sich eine zusammengeführte Verbindung teilen.

4. Verfahren (200) nach Anspruch 3, wobei:
die sich mindestens zwei Pfade mit gleichen Kosten die zusammengeführte Verbindung teilen, so dass die mindestens zwei Pfade mit gleichen Kosten vor der zusammengeführten Verbindung getrennte Pfade sind.

5. Verfahren nach Anspruch 4, wobei:
das Senden (225) von Datenverkehr das Senden von Datenverkehr über die mindestens zwei Pfade mit gleichen Kosten und das Begrenzen einer über die mindestens zwei Pfade mit gleichen Kosten gesendeten Datenverkehrssumme auf einen Bandbreitenkapazitätswert der zusammengeführten Verbindung umfasst.

6. Verfahren nach Anspruch 3, das ferner Folgendes umfasst:

Bestimmen, dass sich die mindestens zwei Pfade mit gleichen Kosten eine zusammengeführte Verbindung teilen, so dass die mindestens zwei Pfade mit gleichen Kosten separate Pfade sind, die auf die zusammengeführte Verbindung folgen;

Bestimmen (215), dass eine Verbindung mit der kleinsten Bandbreitenkapazität für jeden der Vielzahl von Pfaden mit gleichen Kosten auf die zusammengeführte Verbindung folgt;

Bestimmen (220), dass eine Bandbreitenkapazität der zusammengeführten Verbindung größer oder gleich einer Summe der Kapazitäten der kleinsten Bandbreitenkapazitätsverbindung für jeden der mindestens zwei Pfade mit gleichen Kosten über die Rückausbreitung ist; und

Senden (225) von Datenverkehr über die zusammengeführte Verbindung bis zu einem Wert der Summe der Kapazitäten der kleinsten Bandbreitenkapazitätsverbindung für jeden der mindestens zwei Pfade mit gleichen Kosten.

**7.** Verfahren nach Anspruch 1, wobei das Bestimmen (205) der Vielzahl von Pfaden mit gleichen Kosten das Durchführen eines Dijkstra-Prozesses unter Verwendung einer Prioritätswarteschlange umfasst.

**8.** Verfahren nach Anspruch 7, wobei das Bestimmen (215) der Bandbreitenkapazität für jede Verbindung von jedem der Vielzahl von Pfaden mit gleichen Kosten das Empfangen von Verbindungsstatusprotokollnachrichten umfasst, die eine Kapazität für jede Verbindung in der Vielzahl von Pfaden mit gleichen Kosten identifizieren.

**9.** Vorrichtung (105), die Folgendes umfasst:

eine Netzwerkschnittstelleneinheit (710), um die Kommunikation über ein Netzwerk zu ermöglichen; und

einen Prozessor (720), der mit der Netzwerkschnittstelleneinheit gekoppelt ist, um ein Verfahren nach einem der vorhergehenden Ansprüche durchzuführen.

**10.** Ein oder mehrere computerlesbare Speichermedien, die mit Software codiert sind, die computerausführbare Anweisungen umfasst, und bei deren Ausführung ein Verfahren nach einem der Ansprüche 1 bis 8 durchgeführt werden kann.

## Revendications

**1.** Procédé (200), consistant à :

déterminer (205) une pluralité de trajets à coût égal par l'intermédiaire d'un réseau, d'un nœud source à un nœud de destination ;

déterminer (210) une capacité de bande passante maximale pour chaque liaison de chaque trajet à coût égal de la pluralité de trajets à coût égal ;

déterminer (215) une liaison à capacité minimale sur chaque trajet à coût égal à partir des capacités de bande passante maximales déterminées, la détermination consistant à remplir (215) une matrice de flux stockant une capacité de bande passante pour chaque liaison sur chaque trajet à coût égal de la pluralité de trajets à coût égal d'un trafic se terminant au niveau du nœud de destination,

le remplissage de la matrice de flux consistant à réaliser un processus de repropagation consistant à convertir une matrice de flux initiale (350a) en une matrice de flux finale (350b) par l'intermédiaire du processus de repropagation,

la matrice de flux initiale (350a) comprises des sommets et des liaisons qui sont utilisés dans la pluralité déterminée de trajets à coût égal, une capacité infinie étant donnée à une valeur de capacité du nœud source et tous les autres sommets étant marqués avec une capacité de 0 ; et

la conversion consistant à :

pour chaque liaison entre un sommet parent et un sommet de destination, sur chaque trajet à coût égal de la pluralité de trajets à coût égal se terminant au niveau du nœud de destination, déterminer une valeur de la capacité de la liaison, de sorte que la valeur soit un minimum d'une capacité d'un sommet parent et d'une capacité de la liaison, et

pour chaque liaison sur chaque trajet à coût égal de la pluralité de trajets à coût égal pour un trafic se terminant au niveau du nœud de destination, du nœud de destination au nœud source :

au niveau de sommets où le trafic provient d'un unique sommet ou va vers un unique sommet, repropager la valeur déterminée vers une liaison précédente sur le trajet,

au niveau de sommets où le trafic provient d'une pluralité de sommets parents, repropager chaque capacité des sommets parents sur leur trajet, et

au niveau de sommets où le trafic se divise vers des sommets intermédiaires, utiliser une variable temporaire pour stocker la valeur déterminée pour chaque sommet intermédiaire, ajouter ensemble les valeurs stockées dans les variables temporaires et repropager la valeur ajoutée sur le reste du trajet ;

déterminer (220), à partir de la matrice de flux, une capacité de bande passante agrégée pour un trafic qui est envoyé par le nœud source et qui se termine au niveau du nœud de destination, en agrégeant des capacités des liaisons à la capacité de bande passante minimale pour chaque trajet à coût égal de la pluralité de trajets à coût égal entre le nœud source et le nœud de destination ; et

envoyer (225) un trafic du nœud source au nœud de destination, de sorte que :

le trafic envoyé ne dépasse pas la capacité de bande passante agrégée pour le nœud de destination, et le trafic envoyé sur chaque trajet à coût égal de la pluralité de trajets à coût égal ne dépasse pas des capacités de bande passante des liaisons à capacité de bande passante minimale pour des trajets à coût égal respectifs pour un trafic envoyé au nœud de destination.

2. Procédé selon la revendication 1, dans lequel l'envoi (225) d'un trafic par l'intermédiaire de chaque trajet à coût égal de la pluralité de trajets à coût égal consiste à diviser le trafic entre un premier trajet à coût égal de la pluralité de trajets à coût égal et un second trajet à coût égal de la pluralité de trajets à coût égal selon un rapport entre une capacité de bande passante pour une liaison à capacité de bande passante minimale du premier trajet à coût égal de la pluralité de trajets à coût égal et une capacité de bande passante pour une liaison à capacité de bande passante minimale du second trajet à coût égal de la pluralité de trajets à coût égal.

3. Procédé selon la revendication 1, dans lequel la détermination (205) de la pluralité de trajets à coût égal consiste à déterminer au moins deux trajets à coût égal qui partagent une liaison fusionnée.

4. Procédé (200) selon la revendication 3, dans lequel :
les au moins deux trajets à coût égal partagent la liaison fusionnée de sorte que les au moins deux trajets à coût égal soient des trajets distincts antérieurs à la liaison fusionnée.

5. Procédé selon la revendication 4, dans lequel :
l'envoi (225) d'un trafic consiste à envoyer un trafic par l'intermédiaire des au moins deux trajets à coût égal et limiter une somme d'un trafic envoyé sur les au moins deux trajets à coût égal à une valeur de capacité de bande passante de la liaison fusionnée.

6. Procédé selon la revendication 3, consistant en outre à :

déterminer que les au moins deux trajets à coût égal partagent une liaison fusionnée de sorte que les au moins deux trajets à coût égal soient des trajets distincts postérieurs à la liaison fusionnée ;

déterminer (215) qu'une liaison à capacité de bande passante minimale pour chaque trajet à coût égal de la pluralité de trajets à coût égal est postérieure à la liaison fusionnée ;

déterminer (220) qu'une capacité de bande passante de la liaison fusionnée est supérieure ou égale à une somme des capacités de la liaison à capacité de bande passante minimale pour chacun des au moins deux trajets à coût égal par l'intermédiaire de la repropagation ; et

envoyer (225) un trafic par l'intermédiaire de la liaison fusionnée jusqu'à une valeur de la somme des capacités de la liaison à capacité de bande passante minimale pour chacun des au moins deux trajets à coût égal.

7. Procédé selon la revendication 1, dans lequel la détermination (205) de la pluralité de trajets à coût égal consiste à réaliser un processus de Dijkstra utilisant une file d'attente de priorités.

8. Procédé selon la revendication 7, dans lequel la détermination (215) de la capacité de bande passante pour chaque liaison de chaque trajet à coût égal de la pluralité de trajets à coût égal consiste à recevoir des messages sur protocole d'état de liaison identifiant une capacité pour chaque liaison dans la pluralité de trajets à coût égal.

9. Appareil (105) comprenant :

une unité interface de réseau (710), configurée pour permettre une communication sur un réseau ; et
un processeur (720), couplé à l'unité interface de réseau pour réaliser un procédé selon l'une quelconque des revendications précédentes.

10. Un ou plusieurs supports de stockage lisibles par ordinateur, codés avec un logiciel comprenant des instructions exécutables par ordinateur et permettant, quand le logiciel est exécuté, de réaliser un procédé selon l'une quelconque des revendications 1 à 8.

100

FIG.1

200

| DETERMINE A PLURALITY OF EQUAL COST PATHS THROUGH A NETWORK FROM A SOURCE NODE TO A DESTINATION NODE | 205 |

| DETERMINE A MAXIMUM BANDWIDTH CAPACITY FOR EACH LINK OF EACH OF THE PLURALITY OF EQUAL COST PATHS | 210 |

| DETERMINE A SMALLEST CAPACITY LINK IN EACH EQUAL COST PATH FROM THE MAXIMUM CAPACITY BANDWIDTHS | 215 |

| DETERMINE AN AGGREGATED MAXIMUM BANDWIDTH FROM THE SOURCE NODE TO THE DESTINATION NODE BY AGGREGATING THE SMALLEST CAPACITY LINKS FOR EACH OF THE PLURALITY OF EQUAL COST PATHS | 220 |

| SEND TRAFFIC THROUGH EACH OF THE PLURALITY OF EQUAL COST PATHS ACCORDING TO A VALUE OF A SMALLEST MAXIMUM BANDWIDTH CAPACITY LINK FOR EACH OF THE PLURALITY OF EQUAL COST PATHS, WHEREIN A TOTAL OF THE SENT TRAFFIC DOES NOT EXCEED THE AGGREGATED MAXIMUM BANDWIDTH, AND TRAFFIC SENT ALONG EACH OF THE PLURALITY OF EQUAL COST PATHS DOES NOT EXCEED THE SMALLEST MAXIMUM BANDWIDTH FOR RESPECTIVE EQUAL COST PATHS | 225 |

FIG.2

300

FIG.3A

350a

**INITIAL FLOW MATRIX**

370    365  375

| LINKS | NODES | | | | | | |
|---|---|---|---|---|---|---|---|
| | 305 | 315 | 320 | 330 | 335 | 325 | 310 |
| 345a | ∞ | 0 | 0 | | | 0 | 0 |
| 345e | ∞ | 0 | | 0 | 0 | 0 | 0 |
| 345b | | | 0 | | | 0 | 0 |
| 345f | | | | | 0 | 0 | 0 |
| 345c | | | | | | 0 | 0 |
| 345g | | | | | | 0 | 0 |
| 345d | | | | | | 0 | 0 |

380    390

396  397

350b

**FINAL FLOW MATRIX**

355    360

| LINKS | NODES | | | | | |
|---|---|---|---|---|---|---|
| | 315 | 320 | 330 | 335 | 325 | 310 |
| 345a | 40 | 10 | | | 10 | 10 |
| 345e | | | 40 | 20 | 20 | 15 |
| 345b | | 10 | | | 10 | 10 |
| 345f | | | | 20 | 20 | 15 |
| 345c | | | | | 10 | 10 |
| 345g | | | | | 20 | 15 |
| 345d | | | | | | 25 |

385    395

**FIG.3B**

| NODE -> | 315 | 320 | 330 | 335 | 325 | 310 |
|---|---|---|---|---|---|---|
| NODE FLOW | 40 | 10 | 40 | 20 | 30 | 25 |

**FIG.3C**

FIG.4A

460

455

| FLOW MATRIX LINK FLOW | | | | | | | | |
|---|---|---|---|---|---|---|---|---|
| LINKS | | | | | | | | |
| | 415 | 430 | 420 | 435 | 425 | 440 | 445 | 410 |
| 450a | 40 | | 40 | | 40 | | | 20 |
| 450e | | 40 | | 40 | | 20 | 10 | 30 |
| 450b | | | 40 | | 40 | | | 20 |
| 450f | | | | 40 | | 20 | 10 | 30 |
| 450c | | | | | 40 | | | 20 |
| 450g | | | | | | 20 | | 20 |
| 450i | | | | | | | 10 | 10 |
| 450j | | | | | | | | 10 |
| 450d | | | | | | | | 20 |
| 450h | | | | | | | | 20 |

FIG.4B

| NODE -> | 415 | 430 | 420 | 435 | 425 | 440 | 445 | 410 |
|---|---|---|---|---|---|---|---|---|
| NODE FLOW | 40 | 40 | 40 | 40 | 40 | 20 | 10 | 50 |

FIG.4C

FIG.5A

| FLOW MATRIX LINK FLOW | | | | | | | |
|---|---|---|---|---|---|---|---|
| LINKS | | | | | | | |
| | 415 | 430 | 420 | 435 | 425 | 440 | 445 | 410 |
| 450a | 40 | | 40 | | 40 | | | 10 |
| 450e | | 40 | | 40 | 40 | 20 | 10 | 40 |
| 450b | | | 40 | | 40 | | | 10 |
| 450f | | | | 40 | 40 | 20 | 10 | 40 |
| 450c | | | | | 40 | | | 10 |
| 450g | | | | | | 20 | | 20 |
| 450i | | | | | | | 10 | 10 |
| 450j | | | | | | | | 10 |
| 450d | | | | | | | | 20 |
| 450h | | | | | | | | 20 |
| 550k | | | | | 40 | | | 10 |

FIG.5B

| NODE -> | 415 | 430 | 420 | 435 | 425 | 440 | 445 | 410 |
|---|---|---|---|---|---|---|---|---|
| NODE FLOW | 40 | 40 | 40 | 40 | 80 | 20 | 10 | 50 |

FIG.5C

600

615

650a

650b

605

610

650c

650d

620

FIG.6A

650a     655a

| LINKS | NODES | | | |
|---|---|---|---|---|
| | 615 | 620 | 610 | D |
| 650a | 40 | 0 | 0 | 0 |
| 650c | 0 | 40 | 0 | 0 |
| 650b | 0 | 0 | 10 | 0 |
| 650d | 0 | 0 | 40 | 0 |
| D->615 | 0 | 0 | 0 | ∞ |
| D->620 | 0 | 0 | 0 | ∞ |
| D->610 | 0 | 0 | 0 | ∞ |

## FIG.6B

655b     650b

| LINKS | NODES | | |
|---|---|---|---|
| | 615 | 620 | 610 |
| 650a | 10 | 0 | 0 |
| 650c | 0 | 40 | 0 |
| 650b | 0 | 0 | 10 |
| 650d | 0 | 0 | 40 |

## FIG.6C

105

740

BANDWIDTH-WEIGHTED PATH
COMPUTATION UNITY

745

MEMORY

720

PROCESSOR(S)

730

NETWORK
INTERFACE

NETWORK
INTERFACE

● ● ●

NETWORK
INTERFACE

710

710

710

FIG.7

**EP 3 186 928 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2658192 A1
- US 7317684 B
- US 20030099194 A1